# EUROPEAN PATENT SPECIFICATION

(11) **EP 2 457 940 B1**
(45) Date of publication and mention of the grant of the patent: **24.10.2018**
(21) Application number: 10192326.6
(22) Date of filing: 24.11.2010
(51) Int. Cl.: C08G 65/00, C08G 18/00, C07D 239/47, C08G 63/00

(54) **Fluorinated supramolecular polymers**
Fluorierte supramolekulare Polymere
Polymères supramoléculaires fluorés

(43) Date of publication of application: 30.05.2012
(73) Proprietor: SupraPolix B.V., 5612 AX Eindhoven (NL)
(72) Inventor: Bosman, Anton Willem, 5613 LK, Eindhoven (NL)
(74) Representative: Nederlandsch Octrooibureau

(56) References cited:
- EP-A1- 1 369 442
- WO-A1-2007/072000
- WO-A1-2008/138927
- WO-A1-2010/002262
- WO-A2-00/35998
- CORDIER P ET AL: "Self-healing and thermoreversible rubber from supramolecular assembly", NATURE, NATURE PUBLISHING GROUP, LONDON, GB, vol. 451, 1 February 2008 (2008-02-01), pages 977-980, XP009096365, ISSN: 0028-0836, DOI: DOI:10.1038/NATURE06669

## Description

### FIELD OF THE INVENTION

The invention relates to fluorinated supramolecular materials comprising a fluorinated supramolecular polymer that show unique new processing and material characteristics due to the presence of additional physical interactions between the polymer chains that are based on multiple hydrogen bonding interactions (supramolecular interactions) such as solventless processing and self-healing behaviour.

### BACKGROUND OF THE INVENTION

This invention relates to fluorinated supramolecular polymers comprising hydrogen bonding units leading to physical interactions between different polymer chains. The physical interactions originate from multiple hydrogen bonding interactions (supramolecular interactions) between self-complementary units capable of forming at least three non-covalent hydrogen bonds. Non-covalent hydrogen bonds are well known and are also indicated as "hydrogen bridges". Units capable of forming at least four non-covalent hydrogen bonds in a row, i.e. quadruple hydrogen bonding units, are a specific embodiment of said self-complementary units and are abbreviated as 4H-units. Sijbesma et al. (Science 278, 1601 - 1604, 1997) discloses 4H-units that are based on 2-ureido-4-pyrimidones. Reference is further made to US 6.320.018. These 2-ureido-4-pyrimidones in their turn are derived from isocytosines.

Telechelic polymers based on polysiloxanes, (Hirschberg et al., Macromolecules 32, 2696 - 2705, 1999), and aliphatic polyesters, poly(ethylene-co-butylene), or polyethers have been modified with 4H-units (Lange et al., J. Polym. Sci. Part A 37, 3657 - 3670,1999; Folmer et al., Adv. Mater. 12, 874 - 878, 2000). Reference is further made to US 7.622.131.

Additionally, polyurethane based polymers with 4H-units as end-cappers that can be used as hot melt adhesive are disclosed in US 2004/087755.

Fluorinated polymers and fluorinated materials comprising such fluorinated polymers are known in the art and are characterized by their unique properties such as hydrophobicity, oleophobicity, low surface-energy, high gas permeability, high lubricity, and low toxicity. Unfortunately, fluorinated polymers are also characterized by difficult processing conditions (high temperatures and/or expensive fluorinated solvents) and a limited choice in mechanical properties of the related materials. Several approaches have been developed to benefit from the desired properties of fluorinated polymers in coating applications.

Cross-linkable coating compositions based on three-component systems are disclosed in US 6.756.468. The first component comprises a mixture of partially fluorinated prepolymers which are obtained by the reaction of (per)fluoropolyether diols and the cyclic trimer of isophorone diisocyanate (IPDI) and a non-cyclic trimer of hexamethylene diisocyanate. The second component comprises a (per)fluoropolyether diol having a lower number average molecular weight than the (per)fluoropolyether diol of the first component. The third component comprises an inert organic solvent. These coatings can be chemically cross-linked in the presence of a catalyst. Consequently, these cross-linkable coatings comprise toxic isocyanates and have a limited pot-life due to the intrinsic reactivity of the isocyanate components towards the diols. Additionally, a cumbersome three-component formulation is needed to prevent undesired cross-linking. Moreover, the cross-linked coatings lack any reversible behaviour.

In another approach, fluorinated materials for antifouling and medical applications are disclosed in US 2007/254278 and US 2009/0165320. These materials have been obtained by photo-chemical cross-linking of methacrylate-functionalised perfluoropolyethers. Although these materials are viscous liquids before cross-linking, the resulting cross-linked materials are not thermo-reversible and need initiating species and UV-radiation to obtain their material properties.

Thermoplastic multi-block-copolymers comprising alternating perfluoropolyether blocks and aromatic, aliphatic or cycloaliphatic polyester blocks are disclosed in US 5.476.910. These polymers show thermoplastic properties due to the presence of (non-fluorinated) rigid aromatic, aliphatic or cycloaliphatic blocks and flexible perfluoropolyether blocks in the polymer chain.

Thermoplastic polyurethanes comprising perfluoropolyether blocks are disclosed in Example 1 of US 5.508.380. These are obtained by polycondensation of perfluoropolyether diols with 4,4'-methylene diphenyl diisocyanate (MDI) and butanediol.

WO2007/072000A1 discloses supramolecular polymers comprising a bonding unit linked to a fluorinated polymer and their use in supramolecular materials.

There is a need in the art for improved fluorinated materials that show thermally reversible properties which allow thermal processing at lower temperatures, and display self-healing properties. Additionally, the thermo-reversible nature of these improved fluorinated materials allows the use solvent-free formulations thereby making the use of, ecologically not preferred, fluorinated solvents which are typically used for manufacturing formulations and materials comprising fluorinated polymers, superfluous.

The present invention discloses fluorinated supramolecular materials comprising a fluorinated supramolecular polymer. The fluorinated supramolecular polymers are liquids at elevated temperatures whereas they are elastomeric at ambient temperature. Moreover, the fluorinated supramolecular polymers can be formulated without the need for (fluorinated) solvents. Fluorinated supramolecular materials display self-healing properties whereby autonomous repair of damaged materials takes place thereby providing a means to repair cracks and scratches autonomously. They also maintain the protective function of a coating to shield the substrate from the surrounding environment.

### SUMMARY OF THE INVENTION

The fluorinated supramolecular polymers in the fluorinated supramolecular materials according to the present invention have better processing characteristics than fluorinated polymers known from the prior art and have autonomous self-healing characteristics without compromising the typical oleophobic and hydrophobic properties known for fluorinated polymers according to the prior art. It is an object of the present invention to provide fluorinated supramolecular materials comprising a fluorinated supramolecular polymer.

The present invention relates to a fluorinated supramolecular material comprising, based on the total weight of the fluorinated supramolecular material:
i) 1 - 50 wt.% of a fluorinated supramolecular polymer, and
ii) 50 - 99 wt.% of
a non-fluorinated polymer; or
a fluorinated compound; or
a combination of a non-fluorinated polymer and a fluorinated compound,
wherein the fluorinated supramolecular polymer contains at least 5% by weight of covalently bonded fluorine atoms, based on the total weight of the fluorinated supramolecular polymer, said fluorinated supramolecular polymer comprising a fluorinated polymer chain and a (self-)complementary unit capable of forming at least three hydrogen bonds [Bonding Unit], said (self-)complementary unit being covalently bonded to said fluorinated polymer chain, said (self-)complementary unit being selected from the group consisting of 4H-units, amino-ethyl-imidazoline derivatives selected from the group consisting of 2-amino ethyl- imidazolidone, 1-(2-[(2-amino ethyl)amino]-ethyl)-imidazolidone and 1-(2-(2-[(2-amino ethylamino]ethyl]amino)-ethyl]-imidazolidone, and C₁ - C₂₀ bis(ureido)alkylenes, -arylenes or -alkarylenes,
wherein the non-fluorinated polymer contains less than 5 % by weight of covalently bonded fluorine atoms, based on the total weight of the non-fluorinated polymer, and
wherein the fluorinated compound is a fluoropolymer containing at least 5 % by weight of covalently bonded fluorine atoms, based on the total weight of the fluoropolymer, and having a molecular weight of 600 to 5000, and wherein then fluoropolymer is a perfluoropolyether.

The present invention also relates to a process for preparing a fluorinated supramolecular material as defined hereinbefore, wherein a fluorinated supramolecular polymer is prepared according to the general scheme:

BU-(Fᵢ)ᵣ + P-(F_{i'})ₛ → P-LG-BU

wherein BU represent a Bonding Unit, Fᵢ represents a reactive group, r is 1 to 4, P represents the fluorinated polymer chain, Fᵢ, represents a complementary reactive group, s is 1 to 6, and LG represents a linking group, said Bonding Unit being selected from the group consisting of 4H-units, amino-ethyl-imidazoline derivatives selected from the group consisting of 2-amino ethyl-imidazolidone, 1-(2-[(2-amino ethyl)amino]-ethyl)-imidazolidone and 1-(2-(2-[(2-amino ethylamino]ethyl]amino)-ethyl]-imidazolidone, and C₁ - C₂₀ bis(ureido)alkylenes, -arylenes or -alkarylenes,
wherein the fluorinated polymer chain contains at least 5 % by weight of covalently bonded fluorine atoms, based on the total weight of the fluorinated polymer chain, and wherein
i) 1 - 50 wt.% of the fluorinated supramolecular polymer is blended with
ii) 50 - 99 wt.% of
a non-fluorinated polymer; or
a fluorinated compound; or
a combination of a non-fluorinated polymer and a fluorinated compound, based on the total weight of the fluorinated supramolecular material,
wherein the non-fluorinated polymer contains less than 5% by weight of covalently bonded fluorine atoms, based on the total weight of the non-fluorinated polymer, wherein the fluorinated compound is a fluoropolymer containing at least 5 % by weight of covalently bonded fluorine atoms, based on the total weight of the fluoropolymer, and having a molecular weight of 600 to 5000, and wherein then fluoropolymer is a perfluoropolyether.

The invention further relates to a fluorinated supramolecular material obtainable by said process.

The present invention still further relates to a coating composition comprising the fluorinated supramolecular material.

### DETAILED DESCRIPTION OF THE INVENTION

The verb "to comprise" as is used in this description and in the claims and its conjugations is used in its non-limiting sense to mean that items following the word are included, but items not specifically mentioned are not excluded. In addition, reference to an element by the indefinite article "a" or "an" does not exclude the possibility that more than one of the element is present, unless the context clearly requires that there is one and only one of the elements. The indefinite article "a" or "an" thus usually means "at least one".

(Self)-complementary units capable of forming at least three hydrogen bonds form in principle non-covalent moieties with each other. However, it is within the scope of this invention that these units can form non-covalent moieties with other materials capable of forming less than three hydrogen bonds. The hydrogen bonding sites comprising one Bonding Unit can form a non-self-complementary or a self-complementary binding group. Non-self-complementary means that a Bonding Unit A forms a bonding moiety A-B with a unit B, wherein B is not a Bonding Unit. Self-complementary means that two Bonding Units A form a bonding moiety A-A. It is preferred that the Bonding Unit is self-complementary.

Further in this document, the term "(self-)complementary units capable of forming at least three hydrogen bonds" is used in its abbreviated form "Bonding Unit". Hence, a "fluorinated supramolecular polymer containing at least 5% by weight of covalently bonded fluorine atoms, based on the total weight of the fluorinated supramolecular polymer, said fluorinated supramolecular polymer comprising a fluorinated polymer chain and a (self-)complementary unit capable of forming at least three hydrogen bonds, said (self-)complementary unit being covalently bonded to said fluorinated polymer chain" is in this document alternatively indicated as a "fluorinated supramolecular polymer" or as a "fluorinated supramolecular polymer comprising a Bonding Unit".

The term "fluorinated polymer chain" is used in this document to indicate a polymer chain of a fluorinated polymer. The fluorinated polymer chain is in some formulas and occasions indicated as the fluorinated polymer chain P. The fluorinated polymer chain P is formed from a fluorinated polymer wherein at least one covalent bond is replaced by a vacant position which enables the formation of a new covalent bond, e.g. a covalent bond between the polymer chain P and a (self-)complementary unit capable of forming at least three hydrogen bonds, wherein the polymer chain P and the self-complementary unit are connected by a linking group LG.

The term "(self)-complementary units capable of forming four hydrogen bonds in a row is used in its abbreviated form "4H-unit". Hence, a "fluorinated supramolecular polymer containing at least 5% by weight of covalently bonded fluorine atoms, based on the total weight of the fluorinated supramolecular polymer, said fluorinated supramolecular polymer comprising a fluorinated polymer chain and a (self-Complementary unit capable of forming at least four hydrogen bonds in a row, said (self-Complementary unit being covalently bonded to said fluorinated polymer chain" is in this document alternatively indicated as a "fluorinated supramolecular polymer comprising a 4H-unit". The Bonding Unit and the 4H-unit are covalently attached to or covalently incorporated in the fluorinated polymer chain.

A fluorinated polymer is a herein defined as a polymer containing at least 5% by weight of covalently bonded fluorine atoms, based on the total weight of the fluorinated polymer. See for example the Chapter on Organic Fluoropolymers in Ullman's Encyclopedia of Industrial Chemistry, Vol. A11, 393, 5th Edition, 1988, Ed. W. Gerhartz, VCH, Weinheim.

Consequently, a non-fluorinated polymer is a polymer containing less than 5% by weight of covalently bonded fluorine atoms, based on the total weight of the non-fluorinated polymer. Preferably, the non-fluorinated polymer comprises at least one, preferably at least two Bonding Units.

A fluorinated compound is defined herein as a fluoropolymer which contains at least 5% by weight of covalently bonded fluorine atoms, based on the total weight of the fluoropolymer.

Self-healing means the ability of a material or polymer to correct any damages or disturbances brought into them, optionally by the addition of a limited amount of energy, such as short heating. Self-healing materials are well known in the art.

The fluorinated supramolecular polymers in the fluorinated supramolecular materials according to the present invention display the typical oleophobic and hydrophobic properties known for fluorinated polymers according to the prior art whereas they also show the (thermo-)reversible characteristics known for supramolecular polymers capable of forming hydrogen bonds. Additionally, by blending with other components, optionally modified with Bonding-Units, the mechanical and rheological properties of the blends could be modified and even further improved. Moreover, the fluorinated supramolecular polymers display self-healing properties. Thus, the fluorinated supramolecular polymers in the fluorinated supramolecular materials according to this invention have improved processing and blending properties and have also self-healing properties.

### The fluorinated supramolecular polymer

The fluorinated supramolecular polymer comprising a Bonding-Unit preferably comprises a fluorinated polymer chain and 2 - 50, more preferably 3 - 50, even more preferably 3 - 20, and most preferably 4 - 15 Bonding-Units. The Bonding-Units may be attached at the termini of the fluorinated polymer chain and/or to intermediate positions of the fluorinated polymer chain or may be incorporated in the fluorinated polymer chain.

Preferably, the number average molecular weight Mₙ of the fluorinated supramolecular polymer comprising a Bonding-Unit is in the range from 300 to 100000, more preferably from 1000 to 20000, more preferably from 1800 to 10000, most preferably from 4000 to 8000 Dalton.

The fluorinated supramolecular polymer comprising a Bonding-Unit according to the present invention may be a linear, star shaped, dendritic, branched, or hyperbranched (co-)polymer. The copolymers may have a random, a block, a segmented or a randomly segmented microstructure.

More preferably, the fluorinated supramolecular polymer comprising a Bonding-Unit is a linear (co)polymer with the Bonding-Unit covalently attached to the fluorinated polymer chain.

Preferably, the fluorinated supramolecular polymer comprising a Bonding-Unit is essentially amorphous, i.e. that it contains few, more preferably essentially no, crystalline domains. It is also preferred that the fluorinated supramolecular polymer comprising a Bonding-Unit has a single glass transition temperature T_{g}. The T_{g} is preferably in the range from -150°C to 200°C. More preferably, the T_{g} is from -150 to 40°C, most preferably from -130°C to -20°C.

The fluorinated supramolecular polymer comprising a Bonding-Unit according to the present invention may comprise ionic or ionogenic groups (ionogenic groups are groups that are capable to form an ionic group). Such polymers are more hydrophilic and have improved water-solubility, water-disperseability, and/or water swelling properties. Preferred are ionogenic groups, which are incorporated in polymer backbone via oxy groups are preferably selected from the group of methyldi(oxyethyl)amine, 2,6-bis-(oxymethyl)-pyridine and 2,2-bis(oxymethyl)-propanoic acid.

The fluorinated supramolecular polymer comprising a Bonding-Unit according to the present invention may comprise a hydrophilic polymeric block. Such fluorinated supramolecular polymers are more hydrophilic and have improved water-solubility, water-disperseability, and/or water swelling properties. The hydrophilic polymeric block is preferably a polyethylene glycol block, a polypropylene glycol block, or a poly(ethylene glycol-co-propylene glycol) block, preferably having a number average molecular weight Mₙ from 200 to 50000, more preferably from 500 to 6000.

### The Bonding-unit

The Bonding Unit comprises at least three hydrogen bonding donors and/or acceptors, preferably four, even more preferably the Bonding Unit is a 4H-unit which comprises four donors and/or acceptors.

In an embodiment of this invention, the Bonding Unit is selected from amino ethyl imidazo line-groups selected from 2-amino-ethyl-imidazolidone, 1-(2-[(2-amino ethyl)amino]-ethyl)-imidazolidone, and 1-(2-{2-[(2-amino ethyl amino]ethyl}amino)-ethyl]-imidazolidone as shown in Scheme 2:

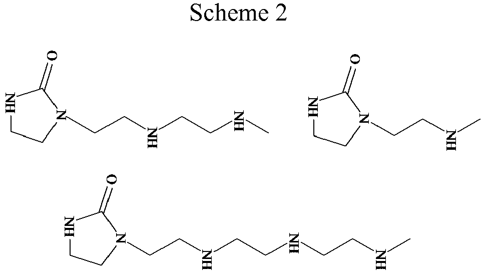

In yet another embodiment of this invention, the Bonding Unit is selected from C₁-C₂₀ bis(ureido)alkylenes, arylenes and alkarylenes, wherein the alkylene group may be linear, branched or cyclic. Preferred examples include 1,4-bis(ureido)butane, 1,5-bis(ureido)pentane, 1,5-bis(ureido)-2-methyl-pentane, 1,6-bis(ureido)hexane, 1,10-bis(ureido)dodecane, 4,4'-bis(ureido) methylene dicyclohexane, bis(ureido)isophorone, 1,3-bis(ureidomethyl)benzene, and 4,4'-bis(ureido) methylene diphenyl. The ureido group has the formula -N(H)-C(O)-N(H)-.

In a preferred embodiment of this invention, the Bonding unit is a 4H-unit, wherein the 4H-unit is represented by the general formulas (1) or (2): 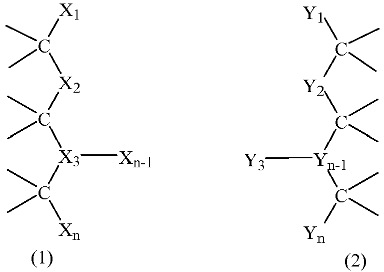 wherein the C-X*ᵢ* and the C-Y*ᵢ* linkages each represent a single or double bond, n is 4 or more, and X*ᵢ* represent donors or acceptors that form hydrogen bridges with the H-bridge forming monomeric unit containing a corresponding general form (2) linked to them with X*ᵢ* representing a donor and Y*ᵢ* an acceptor and vice versa. The structure of these 4H-units is in detail disclosed in US 6.320.018.

It is preferred that in formulas (1) and (2) n equals 4 so and that the 4H-unit comprises four donors or acceptors in the arrays X₁...X₄ and Y₁...Y₄. The 4H-unit may be self-complementary (i.e. the two hydrogen bonded units have an equal array of donors and acceptors), or non self-complementary (i.e. the two hydrogen bonded units have two different arrays of donors and acceptors). Preferably, the 4H-unit comprises two successive donors, followed by two successive acceptors, i.e. it is preferred that X₁ and X₂ are donors and X₃ and X₄ are acceptors. Preferably, the donors and acceptors are O, S, and N atoms. This 4H unit is in detail disclosed in US 6.320.018.

According to a more preferred embodiment of the present invention the 4H-unit has the general formula (3) or formula (4), and tautomers thereof: 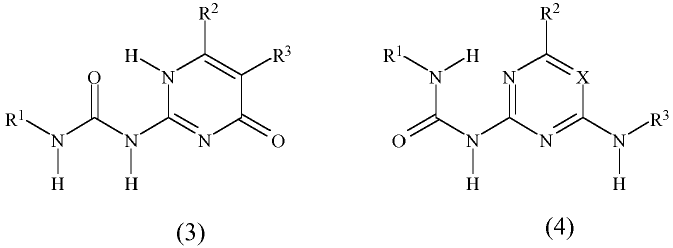 wherein X is a nitrogen atom or a carbon atom bearing a substituent R⁸, preferably a nitrogen atom, and wherein R¹, R², R³ and R⁸ are independently selected from the group consisting of:
(a) hydrogen;
(b) C₁ - C₂₀ alkyl;
(c) C₆ - C₁₂ aryl;
(d) C₇ - C₁₂ alkaryl;
(e) C₇ - C₁₂ alkylaryl;
(f) polyester groups having the formula (5) 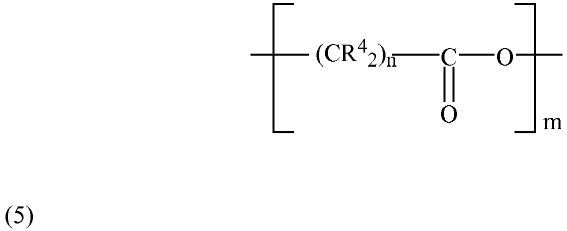 wherein R⁴ is independently selected from the group consisting of hydrogen and C₁ - C₆ linear or branched alkyl, n is 1 - 6 and m is 10 to 100;
(g) C₁ - C₁₀ alkyl groups substituted with 1 - 4 ureido groups according to the formula (6)

   R⁵-NH-C(O)-NH- (6)

   wherein R⁵ is selected from the group consisting of hydrogen and C₁ - C₆ linear or branched alkyl;
(h) polyether groups having the formula (7) 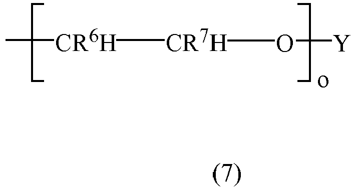 wherein R⁶ and R⁷ are independently selected from the group consisting of hydrogen and C₁ - C₆ linear or branched alkyl and o is 10 - 100; and
(i) oligopeptide groups consisting of sequences of 1 to 50, preferably 1 to 10, amino acids; and
wherein the 4H-unit is bonded to a polymer backbone via R¹, R² and/or R³ (so that R¹, R² or R³ represent a direct bond) with the other R groups representing independently a side chain according to (a) - (i).

In a first preferred embodiment, the 4H-unit is bonded to a polymer chain via R¹ (so that R¹ is absent), while R², R³ and R⁸ are independently any one of the groups (a) - (i) defined above, preferably group (a) and (b), Even more preferably, R², R³ and R⁸ are independently selected from hydrogen, methyl, ethyl, isopropyl, n-butyl or t-butyl. Most preferably, R² is hydrogen and R³ is methyl. Hence, the fluorinated supramolecular polymer is then schematically represented by the general formulas (8) and (9): 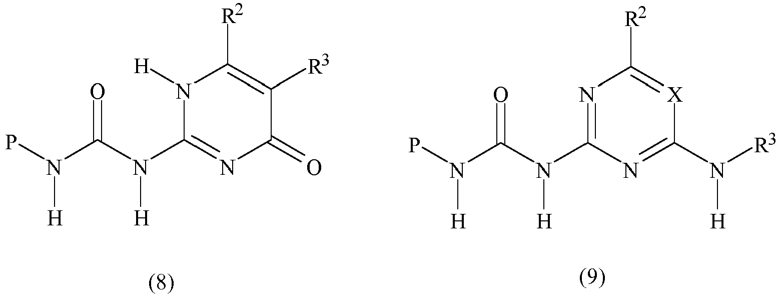 wherein P represents the fluorinated polymer chain. As will be apparent to the person skilled in the art, the fluorinated supramolecular polymer may comprise more than one , preferably 2 - 50, 4H-units as is described above whereas formulas (8) and (9) only depict one 4H-unit. For example, if the fluorinated polymer chain P comprises two 4H-units, formula (8) becomes then: 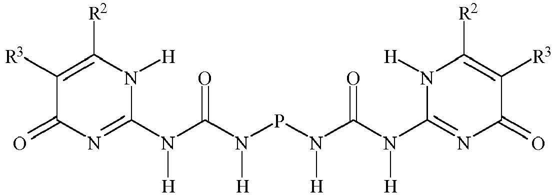 As a consequence, formulas (8) and (9) must therefore not be construed as a fluorinated polymer which is modified with one 4H-unit only. This also holds for the formulas (10), (11), (12) and (13).

In a second preferred embodiment, the 4H-unit is bonded to a polymer chain via R¹ and R² (so that R¹ and R² are both absent), while R³ and R⁸ are selected from any one of the groups (a) - (i) defined above, more preferably from group (a) and (b), most preferably from group (a). Hence, the fluorinated supramolecular polymer is then represented by the general formulas (10) and (11): 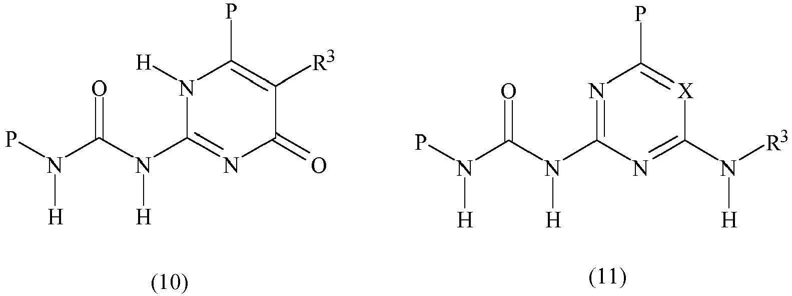 wherein P represents the fluorinated polymer chain.

In a third preferred embodiment, the 4H-unit is bonded to a polymer chain via R¹ and R³ (so that R¹ and R³ are absent), while R² and R⁸ are selected from any one of the groups (a) - (i) defined above, preferably group (b). Even more preferably, R² is independently selected from methyl, ethyl, isopropyl, n-butyl or t-butyl, most preferably methyl. Hence, the fluorinated supramolecular polymer is then represented by the general formulas (12) and (13): 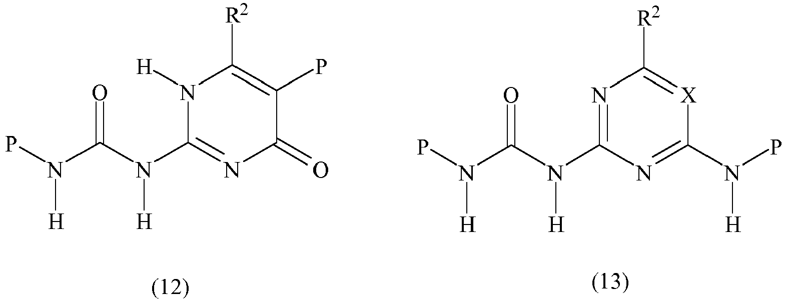 wherein P represents the fluorinated polymer chain. This third preferred embodiment is more preferred than the first and second preferred embodiments described above (cf. general formulas (8), (9), (10) and (11)).

As will be apparent to the person skilled in the art, the groups (b) - (i) defined above may be linear, branched or cyclic where appropriate.

The fluorinated supramolecular polymer can be melt-processed, preferably at temperatures lower than 200°C, more preferably lower than 150°C, and most preferably lower than 100°C.

The fluorinated supramolecular polymer can also be processed from solutions at concentrations higher than 10% by weight, preferably higher than 15% by weight. The solvent is preferably selected from acetate-esters, halogenated solvents (where halogen means fluorine, chlorine, bromine and/or iodine, in particular fluorine), and mixtures thereof.

### The non-fluorinated polymer

Preferably, the non-fluorinated polymer is a non-fluorinated polymer comprising at least two (self-)complementary units capable of forming at least three hydrogen bonds. Hence, the non-fluorinated polymer preferably comprises 0 - 50 Bonding-Units, more preferably 1 - 30, yet more preferably 2 - 20, and most preferably 3 - 10 Bonding Units. The Bonding-Units are covalently attached to the polymer chain. The fluorinated supramolecular material of this invention can obviously comprise different types of non-fluorinated polymers. Preferably, the Bonding Unit is a 4H-unit.

According to a preferred embodiment, the non-fluorinated polymer is selected from the group consisting of polyethers, polyesters, polyamides, polycarbonates, polysaccharides, polyvinylalcohols, polysiloxanes, polydienes, polyolefins, polyacrylates, poly(meth)acrylates, and copolymers thereof.

The polyether is preferably an aliphatic polyether. The polyester is preferably an aliphatic polyester, an aromatic polyester or an polyorthoester; the polyorthoester is preferably an aliphatic polyorthoester. The polyamide is preferably an aliphatic polyamide, for example a polypeptide. The polycarbonate is preferably an aliphatic polycarbonate. The polyvinylalcohol is preferably a partly esterified polyvinylalcohol, i.e. a polyvinylalcohol having a degree of esterification of 0.5 to 20 %). The polydiene is preferably a polybutadiene or a hydrogenated polybutadiene. The polyolefin is preferably a hydrogenated polyolefin.

It is most preferred that the non-fluorinated polymer is selected from aliphatic (co)polyethers and aliphatic (co)polyesters.

According to another preferred embodiment of the invention, the non-fluorinated polymer is selected from the group consisting of polysaccharides, (co)polyethers based on ethylene oxide, propylene oxide, and/or tetrahydrofuran, (co)polyesters based on adipic acid and diols, preferably glycols or hydroxyacids, preferably lactic acid; (co)polyesters based on ε-caprolactone, glycolide, lactide, δ-valerolactone, 1,4-dioxane-2-one, 1,5-dioxepan-2-one, or oxepan-2,7-dione, (co)polycarbonates based on 1,6-hexanediol polycarbonate, (co)polycarbonates based on trimethylenecarbonate, 1,3-dioxepane-2-one, 1,3-dioxanone-2-one, or 1,3,8,10-tetraoxacyclotetradecane-2,9-dione, and polyorthoesters based on 3,9-diethylene-2,4,8,10-tetraoxaspiro[5.5]undecane

The non-fluorinated polymer may comprise a blend of non-fluorinated polymers, for example blends of the preferred groups of the non-fluorinated polymers disclosed above.

The number average molecular weight Mₙ of the non-fluorinated polymer is preferably in the range from 1000 to 100000, more preferably from 2500 to 60000, even more preferably 5000 to 40000, most preferably from 7000 to 25000 Dalton.

The non-fluorinated polymer may be a linear, star shaped, dendritic, branched, or hyperbranched (co)-polymer. The (co)-polymer may have a random, a block, a segmented or a randomly segmented structure.

The Bonding-Unit may be attached to (as a terminal groups or as a grafted group) may be incorporated in the (co)polymer chain of the non-fluorinated polymer. However, it is preferred that the Bonding-Unit is attached as a terminal group to the (co)polymer chain or that the Bonding Unit is incorporated in the (co)polymer chain. Most preferably, the Bonding-Unit is incorporated in the (co)polymer chain thereby forming an integral part of the polymer.

The non-fluorinated polymer may comprise ionic or ionogenic groups. Preferred ionogenic groups are those disclosed for the fluorinated supramolecular polymer.

The non-fluorinated polymer may comprise a hydrophilic polymeric block within the polymer chain. The hydrophilic polymeric block is preferably a polyethylene glycol block, preferably having a number average molecular weight Mₙ from 200 to 50000, and more preferably from 2000 to 20000.

The non-fluorinated polymer can be prepared according to any method known in the art, however it is preferred that they are prepared according to one of the methods disclosed in WO 2004/016598, WO 2004/052963, EP 1687378, or WO 2006/006855.

### The fluorinated compound

The fluorinated compound is a fluoropolymer which contains at least 5% by weight of covalently bonded fluorine atoms, based on the total weight of the fluoropolymer. The fluoropolymer has preferably a kinematic viscosity of 20 to 2000 cSt at 20°C. The fluoropolymer has a Mₙ from 600 to 5000, more preferably from 1000 to 2000. The fluoropolymer is selected from the group consisting of perfluoropolyethers (PFPE), such as the different PFPE-oils with the brand names Galden®, Fomblin® (both from Solvay-Solexis), Krytox® (from DuPont), Demnum® (from Daikin Industries), or Hostinert® (from Hoechst). Preferred liquid PFPE's are Galden® D02 TS, Fomblin® HC-series, Fomblin® HV 25/9, Fomblin® Y-series, Fomblin® W-series, Fomblin® Z-series, Krytox® 143-series, and Demnum® S-series. The fluoropolymer is different from the fluorinated polymer disclosed above since the latter has preferably a number average molecular weight Mₙ of 100 to 100000.

### The fluorinated supramolecular material

The fluorinated supramolecular material comprises a fluorinated supramolecular polymer described above. Obviously, the fluorinated supramolecular material may comprise more than one of fluorinated supramolecular polymers, e.g. fluorinated supramolecular polymers of different chemical nature, of different molecular weight, comprising different kind of Bonding-Units, and/or different numbers of Bonding-Units.

The fluorinated supramolecular material comprises 1% by weight to 50% by weight of the fluorinated supramolecular polymer, based on the total amount of the fluorinated supramolecular material. More preferably, the fluorinated supramolecular material comprises 5% by weight to 50% by weight, even more preferably 10% by weight to 30% by weight, of the fluorinated supramolecular polymer, based on the total weight of the fluorinated supramolecular material.

The fluorinated supramolecular material comprises (i) 1% by weight to 50% by weight of the fluorinated supramolecular polymer [component (a)] and (ii) 50 wt.% to 99 wt.%, based on the total weight of the fluorinated supramolecular material, of:
a non-fluorinated polymer [component (c)], or
a fluorinated compound [component (d)], or
a combination of a non-fluorinated polymer [component (c)] and a fluorinated compound [component (d)],
wherein the non-fluorinated polymer [component (c)] contains less than 5 % by weight of covalently bonded fluorine atoms, based on the total weight of the non-fluorinated polymer, and
wherein the fluorinated compound [component (d)] is a fluoropolymer containing at least 5 % by weight of covalently bonded fluorine atoms, based on the total weight of the fluoropolymer, and having a molecular weight of 600 to 5000, and wherein then fluoropolymer is a perfluoropolyether.

More preferably, the fluorinated supramolecular material comprises (i) 5% by weight to 50% by weight of component (a) and (ii) 50 wt.% to 95 wt.% of component (c), component (d) or any combination thereof, based on the total weight of the fluorinated supramolecular material. Even more preferably, the fluorinated supramolecular material comprises (i) 10% by weight to 30% by weight of component (a) and (ii) 70 wt.% to 90 wt.% of component (c), component (d) or any combination thereof, based on the total weight of the fluorinated supramolecular material. Hence, the fluorinated supramolecular material comprises at least component (a), and one of component (c), component (d)and a combination of components (c) and (d)

According to another embodiment, the fluorinated supramolecular material comprises component (c) and component (d), in which component (c) comprises at least 1 Bonding Unit, preferably at least 1 4H-Unit. In this embodiment, component (c) comprises preferably 2 - 10 Bonding Units, more preferably 2 - 10 4H-Units. The fluorinated supramolecular material according to this embodiment then comprises 70 wt.% to 99 wt.% of component (c) and 1 wt.% to 30 wt.% of component (d), more preferably, 80 wt.% to 95 wt.% of component (c) and 5 wt.% to 20 wt.% of component (d). All these weight ranges are based on the total weight of component (c) and component (d).

### Other ingredients

The supramolecular fluorinated material according to the present invention can also comprise a further functional component that provides a certain property to the material. Examples are components that provide biological activity (i.e. a therapeutic, diagnostic, medicinal or prophylactic effect), rheological function (i.e. thickeners or thixotropic agents), stabilizing compounds (i.e. UV-stabilizers, pH-buffers, or anti-oxydants), optical (i.e. dyes, pigments, or liquid crystalline compounds), or aesthetic activity. Advantageously, the supramolecular fluorinated material comprises less than 50% by weight, preferably from 0.05 - 40% by weight, of the further functional component, based on the total weight of the supramolecular fluorinated material.

The functional component can be used as such, or can be chemically modified with one or more Bonding-Units.

### Method of preparing the supramolecular fluorinated material

The present invention also relates to a process for preparing a fluorinated supramolecular material as defined hereinbefore, wherein a fluorinated supramolecular polymer is prepared according to the general Scheme 4:

BU-(Fᵢ)ᵣ + P-(F_{i'})ₛ → P-LG-BU (Scheme 4)

wherein BU represent a Bonding Unit, Fᵢ represents a reactive group, r is 1 to 4, P represents the fluorinated polymer chain, F_{i'} represents a complementary reactive group, s is 1 to 6, and LG represents a linking group, said Bonding Unit being selected from the group consisting of 4H-units, amino-ethyl-imidazoline derivatives selected from the group consisting of 2-amino ethyl- imidazolidone, 1-(2-[(2-amino ethyl)amino]-ethyl)-imidazolidone and 1-(2-(2-[(2-amino ethylamino]ethyl]amino)-ethyl]-imidazolidone, and C₁ - C₂₀ bis(ureido)alkylenes, -arylenes or -alkarylenes,
wherein the fluorinated polymer chain contains at least 5 % by weight of covalently bonded fluorine atoms, based on the total weight of the fluorinated polymer chain, and wherein
   i) 1 - 50 wt.% of the fluorinated supramolecular polymer [component (a)] is blended with
   ii) 50 - 99 wt.% of
a non-fluorinated polymer [component (c)]; or
a fluorinated compound [component (d)]; or
a combination of a non-fluorinated polymer and a fluorinated compound, based on the total weight of the fluorinated supramolecular material,
wherein the non-fluorinated polymer contains less than 5% by weight of covalently bonded fluorine atoms, based on the total weight of the non-fluorinated polymer, wherein the fluorinated compound is a fluoropolymer containing at least 5 % by weight of covalently bonded fluorine atoms, based on the total weight of the fluoropolymer, and having a molecular weight of 600 to 5000, and wherein then fluoropolymer is a perfluoropolyether.

In the formula BU-(Fᵢ)ᵣ, the reactive group Fᵢ may form a part of the BU, e.g. the amino group in isocytosine (2-amino-3H-pyrimidin-4-one).

Preferably, the fluorinated supramolecular polymer having a Bonding Unit as terminal group or as a group attached to the polymer chain is prepared by reacting a Bonding-unit comprising a reactive group with a fluorinated polymer comprising a complementary reactive group.

In this document, the terms "reactive group" and "complementary reactive group" are used interchangeably to indicate reactive groups that are capable to form a covalent, bond with each other under conventional reaction conditions as will be apparent to a person skilled in the art. Preferably, the reactive groups and complementary reactive groups are selected such that they form a linking group LG selected from:
- -C(O)-O-;
- -O-;
- -C(O)-N-;
- -N(H)-C(O)-O-; and
- -N(H)-C(O)-N(H)-;

Preferred examples of pairs of reactive groups and complementary reactive groups
are:
- carboxylic acid groups/hydroxy groups that can form an ester group -C(O)-O-;
- carboxylic acid groups/amine groups that can form an amide group -C(O)-N-;
- hydroxy groups/hydroxy groups that can form an ether group -O-;
- isocyanate groups/hydroxyl groups than can form a carbamate group -N(H)-C(O)-O-;
- isocyanate groups/amine groups than can form an ureido group -N(H)-C(O)-N(H)-;

Instead of a carboxylic acid group, a carboxylic ester or carboxylic acid halide group may be used. Instead of an isocyanate group, a thioisocyante group can be used. Instead of a hydroxyl group, a thiol group may be used. As amine group, a primary, secondary or tertiary amine group may be used (although primary amine groups are preferred). The carboxylic ester group may be activated. The (thio)isocyanate group may be blocked. In this document, "hydroxy" denotes a -OH group.

A "carboxylic acid group" denotes a -C(O)OH group.

A "carboxylic ester group" denotes a -C(O)OR group, wherein R is selected from the group consisting of C₁ - C₆ alkyl, C₆ - C₁₂ aryl, C₇ - C₁₂ arylalkyl and C₇ - C₁₂ alkylaryl groups, wherein the alkyl groups may be linear, branched or cyclic. Arylalkyl groups are groups such as phenylmethyl while alkylaryl groups are groups like 4-methylphenyl.

An "carboxylic acid halide group" denotes a -C(O)X group, wherein X is a chlorine atom, a bromine atom or a iodine atom. Preferably X is a chlorine or a bromine atom.

An "isocyanate" denotes a -NCO group.

A "blocked isocyanate" denotes a -NHC(O)OR* group, wherein R* is a good leaving group. Suitable examples of good leaving groups are phenol-derivatives phenol and thiophenol derivatives, ester derivatives such as the methyl ester of hydroxy-benzoic acid, alcohol derivatives such as 2-ethyl-hexyl-alcohol and t-butyl-alcohol, oxime derivatives such as methyl-ethyl ketoxime, imidazole groups, caprolactam groups and hydroxy-succinimide groups.

A "thioisocyanate group" denotes a -NCS group.

An "blocked thioisocyanate group" denotes a -NHC(S)OR* group, wherein R* is a good leaving group as indicated for "blocked isocyanate".

A "primary amine group" denotes a -NH₂ group.

A "secondary amine group" denotes a -NHR group, wherein R is selected from the group consisting of C₁ - C₆ alkyl, C₆ - C₁₂ aryl, C₇ - C₁₂ alkylaryl and C₇ - C₁₂ arylalkyl groups, wherein the alkyl groups may be linear, branched or cyclic.

An "activated amine" denotes a -C(R)=NOH group (that can be converted into an amine group via the Beckmann rearrangement), a -C(O)N₃ group (that can be converted into an amine group via the Curtius rearrangement), a -C(O)NH₂ group (that can be converted into an amine group via the Hofmann rearrangement), a -NHC(O)R group wherein R is selected from the group consisting of C₁ - C₆ alkyl, C₆ - C₁₂ aryl, C₇ - C₁₂ alkylaryl and C₇ - C₁₂ arylalkyl groups, wherein the alkyl groups may be linear, branched or cyclic including cyclic groups such as caprolactamyl (1-aza-2-cycloheptanon-1yl), a heterocyclic five or six membered group comprising 3 - 12 carbon atoms and 1 - 3 heteroatoms selected from the group consisting of O, S and N such as imidazole. According to the present invention, the "activated amine group" is preferably caprolactamyl (1-aza-2-cycloheptanon-1yl) or an 1-imidazolyl group.

A "vinyl" denotes a -CR^{a}=CR^{b}₂ group, wherein R^{a} and R^{b} are independently selected from the group consisting of hydrogen atoms and the groups defined for R.

A "(meth)acrylate" denotes a -C=C(R^{c})-C(OH)R group, wherein R^{c} is a hydrogen atom or a methyl group and wherein R is as defined above or a hydrogen atom.

A "thiol" denotes a -SH group.

A "halogen" denotes a -X group, where X is chlorine, bromine or iodine.

As will be apparent to the person skilled in the art, the formula "P-LG-BU" is a simple representation for the product(s) that can be obtained in this reaction. For example, if r = 1 and s = 1, the major product will have the formula [P-LG-BU]. According to another example, if r = 1 and s = 2, a major product will have the formula [BU-LG-P-LG-BU]. According to yet another example, if r = 2 and s = 2, a major product will have the formula [BU-LG-P-LG-BU-LG-P-BU]ₓ. According to yet another example, if r = 1 and s = 4, a major product will have the formula [P-(LG-BU)₄].

In a preferred embodiment of this second embodiment, BU is isocytosine or a derivative thereof according to formula (14): 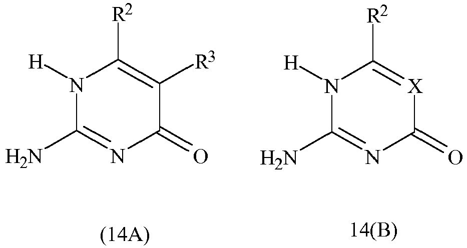 wherein R², R³ and X have the meanings as described above, and wherein in formula (14) a first Fᵢ is -NH₂, a second Fᵢ is a terminal group of R³ and is either -OH or -NH₂, and F_{i'} is -NCO; or BU is an isocytosine derivative according to formula (15), 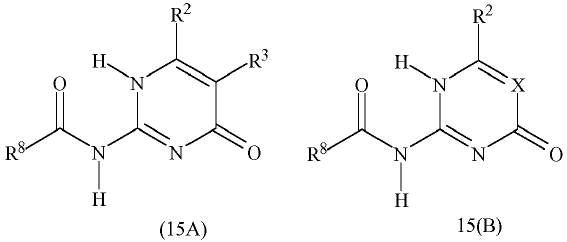 wherein R², R³ and X have the meanings as described above, and wherein Fᵢ is a-NHC(O)R⁸ group wherein R⁸ is selected from the group consisting of C₁ - C₆ alkyl, C₆ - C₁₂ aryl, C₇ - C₁₂ alkylaryl and C₇ - C₁₂ arylalkyl groups, wherein the alkyl groups may be linear, branched or cyclic and may be interrupted by one more heteroatoms selected from the group consisting of N, O and S, including cyclic groups such as caprolactamyl (1-aza-2-cycloheptanon-1yl), a heterocyclic five or six membered group comprising 3 - 12 carbon atoms and 1 - 3 heteroatoms selected from the group consisting of O, S and N such as imidazole, and F_{i'} is -NH₂. Formula (14A) is preferred over formula (14B) and formula (15A) is preferred over formula (15B).

Preferably, the fluorinated supramolecular polymer is obtained in a bulk process or in a solution process in which the solids content is between 30 and 100 weight%, more preferably between 60 and 99 weight%, based on the total weight of the solution.

Preferably, the fluorinated supramolecular polymer comprising a Bonding-Unit is prepared from fluorinated polymers having functional end-groups. More preferably, the fluorinated supramolecular polymer is prepared from perfluoropolyethers (PFPE's) having functional end-groups. PFPE's are polyethers composed of multiple, sequentially linked, fluorinated aliphatic ether units in which essentially all of the hydrogen atoms have been substituted with fluorine atoms. The aliphatic ether units are typically linear or branched, saturated or unsaturated C₁-C₄ alkyl units.

These fluorinated polymers can for example be prepared by photo-oxidation of tetrafluoroethylene or hexafluoropropylene (Fomblins®), base-catalyzed polymerization of perfluoropropeneoxide (Krytox®), or base-catalyzed polymerization of trimethylene oxide (Demnum®). Examples of functional end groups comprised by commercially available PFPE's are carboxylic acid groups (-CO₂H; Demnum® SH., Krytox® 157 FSM, and Fomblin® Z DIAC), hydroxy groups (-OH; Fomblin® Z DOL, Fomblin® Z DOL TX, Fomblin® Z TETRAOL, Fluorolink® E10/E10H), isocyanate groups (-NCO; Fomblin® Z DISOC), and carboxylic ester groups (Fomblin® Z DEAL).

Preferably, the functional end-groups of the fluorinated polymers are selected from the group consisting of carboxylic acid groups (-CO₂H), hydroxy groups (-OH), isocyanate groups (-NCO) and carboxylic ester groups (-CO₂R^{a}, wherein R^{a} is a C₁ - C₂₄ alkyl group or a C₆ - C₂₄ aryl group, the alkyl and aryl groups being optionally substituted, wherein the alkyl groups may be interrupted by one or more hetero-atoms, preferably independently selected from O and N)

More preferably, the fluorinated supramolecular polymer comprising a Bonding-Unit is prepared from a perfluoropolyether having two hydroxy end-groups. Suitable perfluoropolyethers include Fomblin® Z-Dol and Fomblin® ZDOL-TX. Even more preferably, the fluorinated supramolecular polymer comprising a Bonding-Unit is prepared from a perfluoropolyether having two hydroxy end-groups and a number average molecular weight Mₙ of 2000 to 4500.

According to the present invention, the relative weight of the polymer chain of the fluorinated polymer is at least 70% by weight, based on the total weight of the fluorinated supramolecular polymer. More preferably, the relative weight of the polymer chain of the fluorinated polymer is at least 75% by weight, based on the total weight of the fluorinated supramolecular polymer. Even more preferably, the relative weight of the polymer chain of the fluorinated polymer is at least 80% by weight, based on the total weight of the fluorinated supramolecular polymer.

The relative weight of the polymer chain of the fluorinated polymer is less than 100% by weight, based on the total weight of the fluorinated supramolecular polymer.

This blending of components (a), (c) and/or (d) results in supramolecular fluorinated materials with the desired material properties. In particular, if more than one of components (a), (c) and (d) comprise one or more Bonding-Units, these will all strongly contribute to strong physical interactions between the different components in the blend. In particular, it is therefore preferred according to the present invention that at least both components (a) and (c) have at least one Bonding-Unit, whereas the optional other component may have no Bonding Units. The blending of all components can be done by conventional processes, i.e. solution processing or melt-processing, or a combination of both.

The concept of supramolecular blending of the different components (a), (c) and/or (d), also allows tuning the mechanical performance of the fluorinated supramolecular materials together with its typical fluoro-characteristics.

The fluorinated supramolecular material can be obtained in three different ways: method (i) comprises blending the different components with each other in conjunction with a medium consisting of one or more (fluorinated) solvents, in which these components are dissolved or dispersed, preferably dissolved. This first method (i) is preferably followed by processes for dissolved polymers known in the art.

A second method (ii) comprises blending the different components with each other in the bulk at elevated temperatures, preferably 40° to 150°C (*vide infra*). This second method (ii) is preferably followed by solventless processes for polymers known in the art.

Both methods (i) and (ii) can also be combined. Preferably, blending takes place according to method (ii) without the need for (fluorinated) solvents.

Processing according to method (i) can be done from organic solvents or aqueous media, depending on the solubility of different components. Preferably, a solvent or mixture of solvents is used such as hexafluoroacetone, hexafluorotoluene, fluorinated ethers, ethylacetate, butylacetate, propylenecarbonate, water, acetone, methyl ethyl ketone, THF, DMSO, DMF, NMP, supercritical CO₂ or aliphatic alcohols, such as ethanol. The supramolecular fluorinated material is preferably obtained by solvent casting, dip-coating, freeze-drying, precipitation casting, spray coating, painting, roll-coating, foaming, solvent spinning, wet spinning, electro-spinning, micro-contact printing, ink jet printing, particulate-leaching techniques, phase-separation techniques or emulsion processes.

If the fluorinated supramolecular material is a coating composition, the choice of solvent(s) should be such that the desired viscosity of the solution for the coating process is obtained, preferably polar solvents should be used to reduce hydrogen bonding between the polymers. Moreover, the solvent has preferably a low boiling point in order to facilitate removal from the solvent(s) after the coating process, and the solvent (or solvent mixture) has preferably only limited toxicity. Therefore, drying of the fluorinated supramolecular material is required after the coating process.

As will be known by persons skilled in the art, special care needs to be taken to clean the substrate surface when the fluorinated supramolecular material is applied as a coating to this substrate. For example, wettability of the substrate can be improved by liquid etching techniques, such as the use of chromic acid, aqueous sodium hydroxide and fuming sulfuric acid, or plasma etching techniques.

Processing according to method (ii) is done at temperatures sufficient high to allow processing of the components although temperatures should be not too high to prevent degradation of the different components. Preferably, processing temperatures are in between 40 °C and 150 °C, most preferably in between 50°C and 120°C. The supramolecular bioresorbable or biomedical materials are preferably obtained by extrusion, reactive-extrusion, micro-extrusion, fused deposition modelling, molding, lamination, film-blowing, reaction injection molding (RIM), spinning techniques, rapid prototyping, or by thermal or photocuring of a coating.

Optionally, the supramolecular fluorinated material can be used to prepare a hydrogel, i.e. a gel in which the liquid is water. Hydrogels can be obtained by persons skilled in the art by balancing the ratio of hydrophilic and hydrophobic components in components (a) and optionally (b) in the formulation. Hydrogel materials have a high water content, potentially mimicking different roles of the extracellular matrices in tissue. Consequently, hydrogels find many uses in biomedical applications such as controlled drug delivery, delivery matrices or as coatings.

According to this invention, additional ingredients other than (a), (c) and/or (d), may be added to the material such as excipients known in the art such as for example anti-oxidants and pH-buffers.

### Applications

The supramolecular fluorinated materials according to the invention are preferably suitable for applications related to coating applications. The present invention therefore also relates to a coating composition comprising the supramolecular fluorinated material. The coating composition is preferably selected from the group consisting of protective coatings, low-friction coatings, superhydrophobic coatings, textile coatings, paper coatings, sizing agents, antistick coatings, weather resistant paints, coil coatings, anticorrosive coatings, architectural coatings, oil-repellant coatings, biomedical coatings for protheses, implants, stents, catheters, or other medical devices that come in contact with living tissue. According to another more preferred application, the supramolecular biomedical material is useful as filling material for cosmetic surgery and in reconstructive plastic surgery. Hence, the present invention therefore also relates to a surgery filling material composition comprising the supramolecular fluorinated material.

### EXAMPLES

The following examples further illustrate the preferred embodiments of the invention. When not specifically mentioned, chemicals are obtained from Aldrich, including the fluorinated polyethers.
ZDOL 4000 is a methylol terminated fluorinated polyether with the following formula: HOCH₂CF₂(OCF₂CF₂)ₚ(OCF₂)_{q}OCF₂CH₂OH
With p/q = 0.8 - 1.2, and Mₙ = 4000
ZDOL TX is an ethoxylated fluorinated polyether with the following formula: HO(CH₂CH₂O)ₙCH₂CF₂(OCF₂CF₂)ₚ(OCF₂)_{q}OCF₂CH₂(OCH₂CH₂)ₙOH
With p/q = 0.8 - 1.2, n = 1.3, and Mₙ = 2100

### Examples 1 to 4 describe different Bonding Units

### Example 1:

2-Acetylbutyrolactone (2 mL) and guanidine carbonate (3.3 g) were put to reflux in absolute ethanol (20 mL) in the presence of triethylamine (5.2 mL). The solution became yellow and turbid. After overnight heating at reflux, the solid was filtered, washed with ethanol, and suspended in water. The pH was adjusted to a value of 6-7 with an HCl-solution, and the mixture was stirred for a while. Filtration, rinsing of the residu with water and ethanol and subsequent drying of the solid gave the pure 5(2-hydroxy ethyl)-6-methyl isocytosine. 1H NMR (400 MHz, DMSO-d6): δ 11.2 (1H), 6.6 (2H), 4.5 (1H), 3.4 (2H), 2.5 (2H), 2.1 (3H).

### Example 2:

Methyl-4,4-dimethyl-3-oxo-pentanoate (50.0 g) and guanidine carbonate (56.9 g) are heated overnight under a nitrogen atmosphere in ethanol (400 mL) at an oil bath temperature of 80 °C. The reaction mixture is filtered, the filtrate is evaporated down, water (50 mL) is added and the pH is brought to 6 by addition of acetic acid. The white precipitate is filtered, washed with several portions of water and dried in vacuo to give a quantitative yield of 6-*t*-butyl isocytosine. 1H NMR (400 MHz, DMSO-d6): δ 10.6 (1H), 6.4 (2H), 5.45 (1H), 1.1 (9H).

The resulting 6-*t*-butyl isocytosine (10.4 g) and hexyldiisocyanate (68 g) were stirred and kept under an argon atmosphere. The mixture was subsequently heated overnight at an oil bath temperature of 100 °C. After cooling to room temperature, the clear solution becomes turbid. Hexane (300 mL) is added, and the mixture is stirred to obtain a suspension of fine particles. The solid is filtered, washed with several portions of hexane and dried, resulting in an isocyanate-functional 4H-unit. Yield: 86%. 1H NMR (400 MHz, CDC13): δ 13.2 (1H), 11.9 (1H), 10.1 (1H), 5.8 (1H), 3.2 (4H), 1.6 (4H), 1.4 (4H), 1.2 (9H).

### Example 3:

Methylisocytosine (5.2 g) was added to isophoronediisocyanate (IPDI, 50 mL) and subsequently stirred at 90 °C under an argon atmosphere for 3 days. The resulting clear solution was precipitated in heptane. The white gom was collected, heated in 150 mL heptane, cooled on ice, and filtered. The same procedure was repeated once more with the white residu, resulting in a white powder formed by the isocyanate functional 4H-unit. 1H NMR (400 MHz, CDC13): δ 13.1 (1H), 12.0 (1H), 10.1 (1H), 5.9 (1H), 4.1-3.1 (3H), 2.1 (3H), 2.0-0.9 (15H).

### Example 4:

The isocyanate functional 4H-unit of Example 3 (28 g) was dissolved in chloroform (0.5 L), and thereafter hydroxy ethyl methacrylate (HEMA, 9.6 mL) and 8 drops of dibutyl tin dilaurate (DBTDL) were added. The mixture was stirred at an oil bath temperature of 90 °C for 4 hours, and was then cooled and filtered. The filtrate was concentrated and dropped into an excess of diethylether. The precipitate was collected by filtration, and was washed with diethylether. Drying in vacuo gave a solid product containing a methacrylate functional 4H-unit. 1H NMR (400 MHz, CDC13): δ 13.1 (1H), 11.8 (1H), 10.1 (1H), 6.1 (1H), 5.8 (1H), 5.6 (1H), 5.0 (1H), 4.3 (4H), 4.1-3.6 (1H), 3.1-2.9 (2H), 2.1 (3H), 2.0 (3H), 1.8-1.5 (2H), 1.4-0.8 (13H).

### Examples 6 to 13 describe different Bonding-Unit comprising fluoropolymers

### Example 6

ZDOL TX (524 mg) was dissolved in butylacetate (2 mL) at 70°C together with one drop of dibutyltindilaurate (DBTDL), followed by the addition of the isocyanate of Example 2 (160 mg). The reaction mixture was subsequently heated to 100°C while stirring in an inert atmosphere. After 4 hours the reaction mixture was diluted with butylacetate (2 mL) and cooled down to 25°C. Upon standing, a gum separated from the butylacetate which was isolated and dried in vacuo resulting in a flexible clear film. The materials has a Tg of -112°C and is a liquid above 130°C.

### Example 7

ZDOL 4000 (574 mg) was dissolved in butylacetate (2 mL) at 70°C together with one drop of dibutyltindilaurate (DBTDL), followed by the addition of the isocyanate of Example 2 (101 mg). The reaction mixture was subsequently heated to 100°C while stirring in an inert atmosphere. After 4 hours a the solvent was removed by drying in vacuo at 60°C. The resulting flexible material has a Tg of -116°C and is a liquid above 130°C.

### Example 8

ZDOL 4000 (716 mg) was dissolved in a 1/1 mixture of hexa-fluoroxylene and chloroform (3 mL) and heated to 70°C followed by the addition of the isocyanate of Example 3 (131 mg) and 1 drop of DBTDL. After 16h stirring at 70°C, the reaction mixture was diluted with chloroform (10 mL) and cooled to 25°C upon which a white slurry precipitates which was isolated and dried in vacuo, resulting in a flexible film.

### Example 9

ZDOL 4000 (780 mg) was dissolved in a 1/1 mixture of hexa-fluorobenzene and chloroform (3 mL) and heated to 70°C followed by the addition of the bis(isocyanate) of Example 4 (94 mg). After 2 h the solvent was removed in vacuo and a rubbery like material was obtained. The materials has a Tg of -117°C and is liquid-like above 140°C.

### Example 10

ZDOL 4000 (2.57 g) was mixed with isophoronediisocyanate (355 mg) and stirred for 16h at 80°C. Subsequently the reaction mixture was heated to 120°C followed by the addition of propylenecarbonate (0.5 mL) and 6-methyl-isocytosine (200 mg). After 2 hours stirring under an inert atmosphere, the reaction mixture was cooled to 25°C upon which a solid separated from the solution. This solid was isolated, dissolved in hot hexafluoroxylene and filtered over celite, followed by drying in vacuo resulting in a white rubbery material.

### Example 11

The methacrylate containing 4H-unit of Example 5 (200 mg) was mixed together with 1,1,1,3,3,3-hexafluoroisopropyl methacrylate (4 g), t-butyl methacrylate (0.5 g), AIBN (12 mg) and transfer agent mercapto ethanol (75 microliter) in DMF (15 mL). The mixture was subsequently degassed by purging with argon for 1 hr prior to polymerization. Polymerization was conducted at 80 °C for about 3 to 4 hours, after which the mixture was cooled down to room temperature and the polymer was recovered by precipitation into THF/hexane (3/1 v/v). The resulting fluoropolymer was obtained after isolation of the precipitate followed by drying in vacuo.

### Example 12

ZDOL 4000 (1.80 g) was mixed with isophoronediisocyanate (243 mg) and stirred for 16h at 80°C. Subsequently the reaction mixture was heated to 120°C followed by the addition of butylacetate (1 mL) and 1,5-diamino-2-methyl6-methylpentane (62 mg). After 2 hours stirring under an inert atmosphere, the reaction mixture was cooled to 70°C following by the addition of ethanol (20 mL) upon which a solid separated from the solution. This solid was isolated and dried in vacuo resulting in a rubbery material.

### Examples 13 describe synthesis of components (b)

### Example 13

Bis-hydroxy-functional polycaprolactone (PCL, Mₙ = 1250, 1.25 g), predried *in vacuo* at 100°C, was mixed with IPDI (1.25 g) at 40°C followed by the addition of 1 drop DBTDL and stirred for 3h under an argon atmosphere resulting in a clear liquid. To this reaction mixture was added the isocytosine-derivative obtained in Example 1 (g) followed by stirring at 120°C for 1 h. The reaction mixture was subsequently poured into a flat cup when still hot and heated to 150°C in an oven under vacuo for 30 minutes. The non-fluorinated polymer was obtained after cooling down to 20°C under in the presence of ethanol and subsequent drying in vacuo.

### Examples 14 describes different blends of the different components (a), (b), and or (f)

### Example 14

Blends were obtained using two different methods: (i) compounding with extruder, or (ii) solution blending.

### General description of method (i): compounding

The desired amount(s) of selected polymer for component (a) and/or the selected polymer for component (b) was/were brought into a Minilab twin-screw extruder (Haake) at 120°C and cycled at 40 rpm. If component (f) was also present in the blend, the desired amount of (f) was subsequently slowly added to the extruder followed by recirculating the molten polymer blend in a closed loop at 120°C and 80 rpm for 5 minutes, after which the polymer blend comprising the different components was flushed from the extruder and cooled to 25°C. The fluorinated supramolecular material was obtained as a solid and could optionally be obtained as pellet or a fiber when a pelletizer or spinneret was used to collect the polymer melt. Generally, 5-7 grams of material were used per production run.

### General description of method (ii): solution

The selected polymer for component (a) and/or the selected polymer for component (b) was/were dissolved in hexafluoropropanol (HFIP) having a final solids content between 5 and 15 weight%. If component (f) was also present in the blend, the desired amount of (f) was subsequently added to the HFIP-solution. After evaporation of the solvent, the fluorinated supramolecular material was obtained as a solid and could optionally be obtained as a sheet, fiber or non-woven when filmcasting or (wet-)spinning was applied to collect the material from the solution. Generally, 1-3 grams of material were used per production run.

**Table 1: Composition and production method of the blends obtained in Example 17**

| Entry | Component (a)/ weight% | Component (b)/ weight% | Component (f)/ weight% | method | appearance |
|---|---|---|---|---|---|
| A | Example 10/ 55% | - | Fomblin Y25/ 45% | compounding | White soft rubber |
| B | Example 10/ 70% | - | Fomblin ZDOL/ 30% | compounding | White soft rubber |
| C | Example 10/ 9% | Example 13/ 91% | - | compounding | Flexible material |
| D | Example 10/ 4% | Example 13/ 91% | Fomblin Y25/ 5% | compounding | Flexible material |
| E | - | Example 13/ 91% | Fomblin Y25/ 9% | solution | Flexible material |
| F | Example 10/ 10% | Example 13/ 90% | | solution | Flexible material |
| G | - | Example 13/ 90% | Fomblin Y25/ 10% | compounding | Flexible material |

### Experiments 15 and 16 describe self-healing properties of the materials

### Experiment 15

Flakes of Example 7 were distributed on an aluminium plate followed by heating to 120°C for 5 minutes after which the flakes had formed a homogeneous, slightly hazy, film on the aluminium plate. After cooling down to room temperature a solid homogeneous coating consisting of the fluoropolymer of Example 7 was formed.

This coating was subsequently damaged by scratching it with a knife resulting in a scratch which was visible with the naked eye. Self-healing of this coating was performed by putting it in on a hot plate of 140°C for 15 seconds after which the material had flowed into the damaged area an the homogeneous coating was restored after cooling to room temperature.

### Experiment 16

A rectangular shaped solid particle consisting of the polymer blend of Example 14C was cut in 2 parts, separated for 30 seconds, followed by pressing the two newly formed interfaces together for 10 seconds, thereby reshaping the original rectangular shaped particle. After releasing the pressure on the solid objects, the two parts were bond together as reflected by their load-bearing capacity and their tensile strength which was at least 90% of the original tensile strength.

## Claims

1. A fluorinated supramolecular material comprising, based on the total weight of the fluorinated supramolecular material:
i) 1 - 50 wt.% of a fluorinated supramolecular polymer, and
ii) 50 - 99 wt.% of
a non-fluorinated polymer;or
a fluorinated compound; or
a combination of a non-fluorinated polymer and a fluorinated compound, wherein the fluorinated supramolecular polymer contains at least 5% by weight of covalently bonded fluorine atoms, based on the total weight of the fluorinated supramolecular polymer, said fluorinated supramolecular polymer comprising a fluorinated polymer chain and a (self-)complementary unit capable of forming at least three hydrogen bonds [Bonding Unit], said (self-)complementary unit being covalently bonded to said fluorinated polymer chain, said (self-)complementary unit being selected from the group consisting of 4H-units, amino-ethyl-imidazoline derivatives selected from the group consisting of 2-amino ethyl- imidazolidone, 1-(2-[(2-amino ethyl)amino]-ethyl)-imidazolidone and 1-(2-(2-[(2-amino ethylamino]ethyl]amino)-ethyl]-imidazolidone, and C₁ - C₂₀ bis(ureido)alkylenes, -arylenes or -alkarylenes,
wherein the non-fluorinated polymer contains less than 5 % by weight of covalently bonded fluorine atoms, based on the total weight of the non-fluorinated polymer, and
wherein the fluorinated compound is a fluoropolymer containing at least 5 % by weight of covalently bonded fluorine atoms, based on the total weight of the fluoropolymer, and having a molecular weight of 600 to 5000, and wherein the fluoropolymer is a perfluoropolyether.

2. The fluorinated supramolecular material according to Claim 1, wherein the fluorinated supramolecular polymer comprises 2 - 50 Bonding Units.

3. The fluorinated supramolecular material according to Claim 1 or Claim 2, wherein the number average molecular weight Mₙ of the fluorinated supramolecular polymer is in the range from 300 to 100000.

4. The fluorinated supramolecular material according to any one of Claims 1 - 3, wherein the fluorinated supramolecular polymer has a single glass transition temperature T_{g}, wherein the T_{g} is in the range from -150°C to 200°C.

5. The fluorinated supramolecular material according to Claim 1, wherein the Bonding unit is a 4H-unit, wherein the 4H-unit is represented by the general formulas (1) or (2): 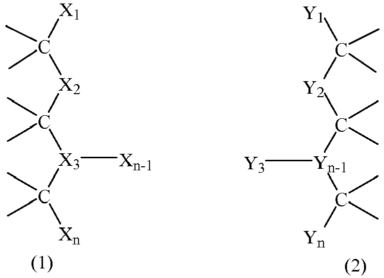 wherein the C-X*ᵢ* and the C-Y*ᵢ* linkages each represent a single or double bond, n is 4 or more, and X*ᵢ* represent donors or acceptors that form hydrogen bridges with the H-bridge forming monomeric unit containing a corresponding general form (2) linked to them with X*ᵢ* representing a donor and Y*ᵢ* an acceptor and vice versa.

6. The fluorinated supramolecular material according to Claim 5, wherein the 4H-unit has the general formula (3) or formula (4), and tautomers thereof: 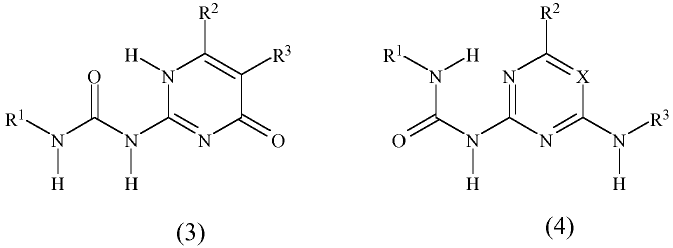 wherein X is a nitrogen atom or a carbon atom bearing a substituent R⁸, preferably a nitrogen atom, and wherein R¹, R², R³ and R⁸ are independently selected from the group consisting of:
(a) hydrogen;
(b) C₁ - C₂₀ alkyl;
(c) C₆ - C₁₂ aryl;
(d) C₇ - C₁₂ alkaryl;
(e) C₇ - C₁₂ alkylaryl;
(f) polyester groups having the formula (5) 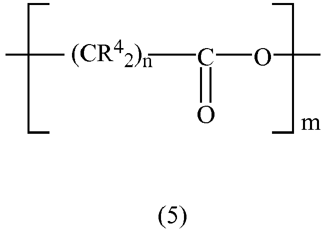 wherein R⁴ is independently selected from the group consisting of hydrogen and C₁ - C₆ linear or branched alkyl, n is 1 - 6 and m is 10 to 100;
(g) C₁ - C₁₀ alkyl groups substituted with 1 - 4 ureido groups according to the formula (6)
R⁵-NH-C(O)-NH- (6)
wherein R⁵ is selected from the group consisting of hydrogen and C₁ - C₆ linear or branched alkyl;
(h) polyether groups having the formula (7) 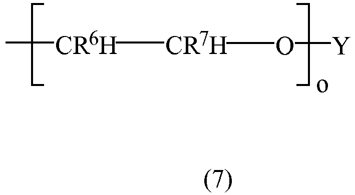 wherein R⁶ and R⁷ are independently selected from the group consisting of hydrogen and C₁ - C₆ linear or branched alkyl and o is 10 - 100; and
(i) oligopeptide groups consisting of sequences of 1 to 50, preferably 1 to 10, amino acids; and
wherein the 4H-unit is bonded to a polymer backbone via R¹, R² and/or R³ (so that R¹, R² or R³ represent a direct bond) with the other R groups representing independently a side chain according to (a) - (i).

7. The fluorinated supramolecular material according to Claim 6, wherein the fluorinated supramolecular polymer is represented by the general formulas (8) and (9): 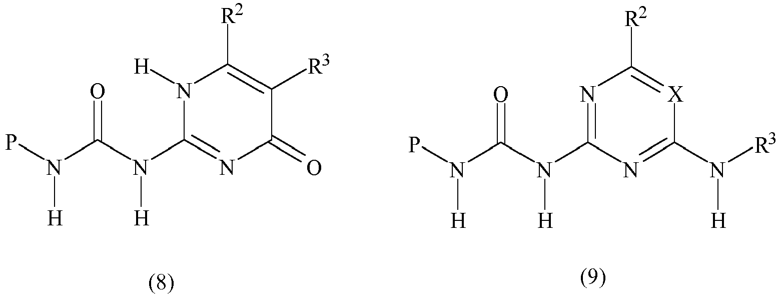 wherein R² and R³ are as defined in Claim 7 and P represents the fluorinated polymer chain.

8. The fluorinated supramolecular material according to Claim 6, wherein the fluorinated supramolecular polymer is represented by the general formulas (10) and (11): 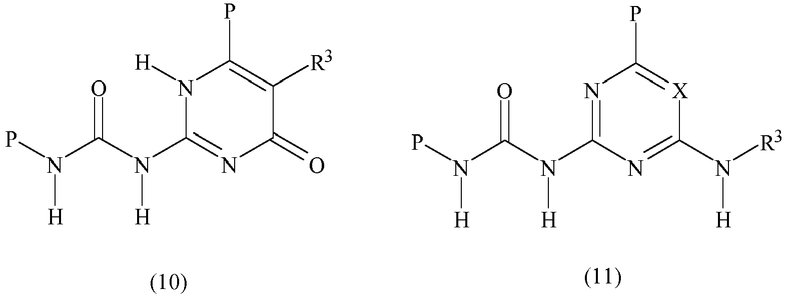 wherein R³ is as defined in Claim 7 and P represents the fluorinated polymer chain.

9. The fluorinated supramolecular material according to Claim 6, wherein the fluorinated supramolecular polymer is then represented by the general formulas (12) and (13): 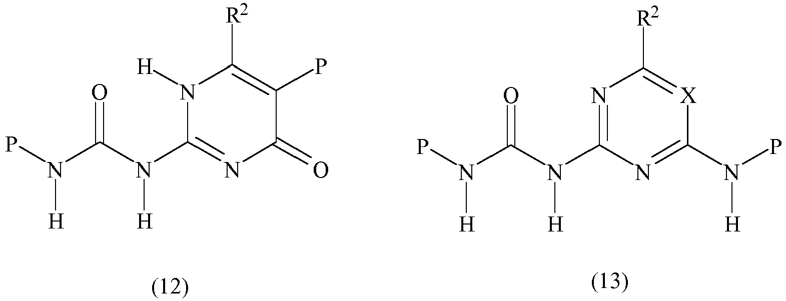 wherein R² is as defined in Claim 7 and P represents the fluorinated polymer chain.

10. The fluorinated supramolecular material according to any one of Claims 1 - 9, wherein the relative weight of the fluorinated polymer chain in the fluorinated supramolecular polymer is at least 70% by weight, based on the total weight of the fluorinated supramolecular polymer.

11. The fluorinated supramolecular material according to any one of Claims 1 - 10, wherein the non-fluorinated polymer comprises at least one Bonding Unit.

12. A process for preparing a fluorinated supramolecular material according to any one of Claims 1 - 11, wherein a fluorinated supramolecular polymer is prepared according to the general scheme:
BU-(Fᵢ)ᵣ + P-(F_{i'})s → P-LG-BU
wherein BU represent a Bonding Unit, Fᵢ represents a reactive group, r is 1 to 4, P represents the fluorinated polymer chain, F_{i'} represents a complementary reactive group, s is 1 to 6, and LG represents a linking group,
said Bonding Unit being selected from the group consisting of 4H-units, amino-ethyl-imidazoline derivatives selected from the group consisting of 2-amino ethyl-imidazolidone, 1-(2-[(2-amino ethyl)amino]-ethyl)-imidazolidone and 1-(2-(2-[(2-amino ethylamino]ethyl]amino)-ethyl]-imidazolidone, and C₁ - C₂₀ bis(ureido)alkylenes, -arylenes or -alkarylenes,
wherein the fluorinated polymer chain contains at least 5 % by weight of covalently bonded fluorine atoms, based on the total weight of the fluorinated polymer chain, and wherein
i) 1 - 50 wt.% of the fluorinated supramolecular polymer is blended with
ii) 50 - 99 wt.% of
a non-fluorinated polymer; or
a fluorinated compound; or
a combination of a non-fluorinated polymer and a fluorinated compound, based on the total weight of the fluorinated supramolecular material,
wherein the non-fluorinated polymer contains less than 5% by weight of covalently bonded fluorine atoms, based on the total weight of the non-fluorinated polymer, wherein the fluorinated compound is a fluoropolymer containing at least 5 % by weight of covalently bonded fluorine atoms, based on the total weight of the fluoropolymer, and having a molecular weight of 600 to 5000, and wherein then fluoropolymer is a perfluoropolyether.

13. The process according to Claim 12, wherein the fluorinated supramolecular polymer is obtainable in a bulk process or in a solution process in which the solids content is between about 30 and about 100 weight%, based on the total weight of the solution.

14. A fluorinated supramolecular material obtainable by the process of Claim 12 or Claim 13.

15. A coating composition comprising the fluorinated supramolecular material according to any one of Claims 1 - 11 or 14.

## Patentansprüche

1. Ein fluoriertes supramolekulares Material, das bezogen auf dem Gesamtgewicht des fluorierten supramolekularen Materials umfasst:
i) 1-50 Gew.-% eines fluorierten supramolekularen Polymers, und
ii) 50 - 99 Gew.-%
eines nicht-fluorierten Polymers; oder
einer fluorierten Verbindung; oder
einer Kombination eines nicht-fluorierten Polymers und einer fluorierten Verbindung, wobei das fluorierte supramolekulare Polymer mindestens 5 Gew.-% kovalent gebundene Fluoratome enthält, bezogen auf das Gesamtgewicht des fluorierten supramolekularen Polymers, wobei das fluorierte supramolekulare Polymer eine fluorierte Polymerkette und eine (selbst-)komplementäre Einheit umfasst, die mindestens drei Wasserstoffbrückenbindungen [Bindungseinheit] bilden kann, wobei die (selbst-)komplementäre Einheit kovalent an die fluorierte Polymerkette gebunden ist, wobei die (selbst-)komplementäre Einheit ausgewählt ist aus der Gruppe bestehend aus 4H-Einheiten, Aminoethylimidazolinderivaten ausgewählt aus der Gruppe bestehend aus 2-Aminoethylimidazolidon, 1-(2-[(2-Aminoethyl)amino]ethyl)imidazolidon und 1-(2-(2-[(2-Aminoethylamino]ethyl]amino)ethyl]imidazolidon, und C₁ - C₂₀ Bis(ureido)alkylenen, -arylenen oder -alkarylenen,
wobei das nicht-fluorierte Polymer weniger als 5 Gew.-% kovalent gebundene Fluoratome enthält, bezogen auf das Gesamtgewicht des nicht-fluorierten Polymers, und
wobei die fluorierte Verbindung ein Fluorpolymer ist, das mindestens 5 Gew.-% kovalent gebundene Fluoratome enthält, bezogen auf das Gesamtgewicht des Fluorpolymers, und das ein Molekulargewicht von 600 bis 5000 aufweist, und wobei das Fluorpolymer ein Perfluorpolyether ist.

2. Das fluorierte supramolekulare Material nach Anspruch 1, wobei das fluorierte supramolekulare Polymer 2 - 50 Bindungseinheiten umfasst.

3. Das fluorierte supramolekulare Material nach Anspruch 1 oder Anspruch 2, wobei das Zahlenmittel des Molekulargewichts Mₙ des fluorierten supramolekularen Polymers im Bereich von 300 bis 100000 liegt.

4. Das fluorierte supramolekulare Material nach einem der Ansprüche 1 - 3, wobei das fluorierte supramolekulare Polymer eine einzige Glasübergangstemperatur T_{g} aufweist, wobei die T_{g} im Bereich von -150 °C bis 200 °C liegt.

5. Das fluorierte supramolekulare Material nach Anspruch 1, wobei die Bindungseinheit eine 4H-Einheit ist, wobei die 4H-Einheit durch die allgemeinen Formeln (1) oder (2) dargestellt wird: 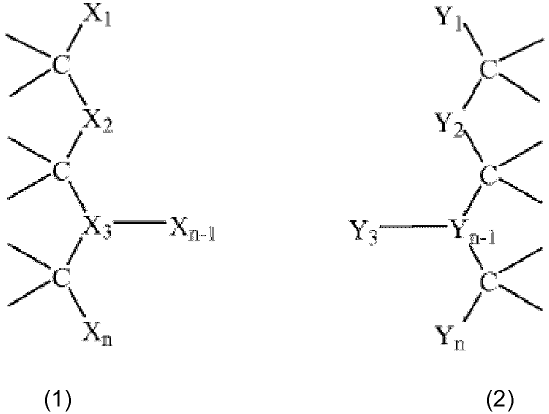 wobei die C-Xᵢ- und die C-Yᵢ-Bindungen jeweils eine Einfach- oder Doppelbindung darstellen, n 4 oder mehr ist, und Xᵢ Donatoren oder Akzeptoren darstellen, die Wasserstoffbrücken mit der H-Brücken bildenden monomeren Einheit bilden, die eine entsprechende mit ihnen verbundene allgemeine Form (2) enthalten, wobei Xᵢ einen Donator und Yᵢ einen Akzeptor darstellt und umgekehrt.

6. Das fluorierte supramolekulare Material nach Anspruch 5, wobei die 4H-Einheit die allgemeine Formel (3) oder (4) aufweist, und Tautomere davon: 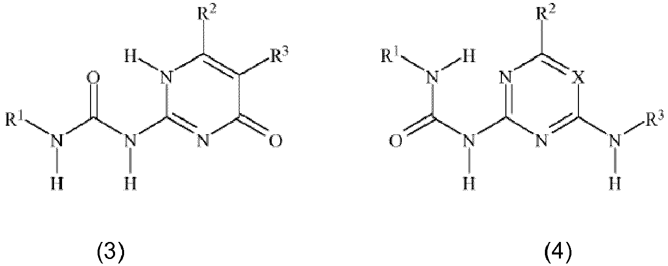 wobei X ein Stickstoffatom oder ein einen Substituenten R⁸ tragendes Kohlenstoffatom ist, vorzugsweise ein Stickstoffatom, und wobei R¹, R², R³ und R⁸ unabhängig ausgewählt sind aus der Gruppe bestehend aus:
(a) Wasserstoff;
(b) C₁ - C₂₀ Alkyl;
(c) C₆ - C₁₂ Aryl;
(d) C₇ - C₁₂ Alkaryl;
(e) C₇ - C₁₂ Alkylaryl;
(f) Polyestergruppen mit der Formel (5) 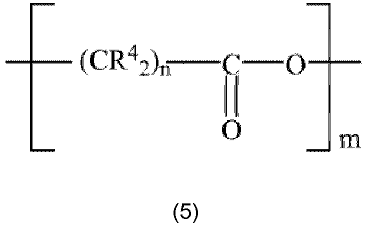 wobei R⁴ unabhängig ausgewählt ist aus der Gruppe bestehend aus Wasserstoff und C₁ - C₆ linearem oder verzweigtem Alkyl, n 1 - 6 ist und m 10 bis 100 ist;
(g) C₁ - C₁₀ Alkylgruppen, die mit 1 - 4 Ureidogruppen gemäß der Formel (6) substituiert sind
R⁵-NH-C(O)-NH- (6)
wobei R⁵ ausgewählt ist aus der Gruppe bestehend aus Wasserstoff und C₁ - C₆ linearem oder verzweigtem Alkyl;
(h) Polyethergruppen mit der Formel (7) 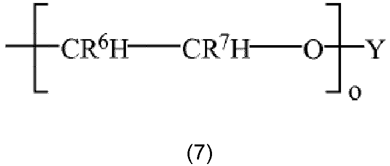 wobei R⁶ und R⁷ unabhängig ausgewählt ist aus der Gruppe bestehend aus Wasserstoff und C₁ - C₆ linearem oder verzweigtem Alkyl und o 10 - 100 ist; und
(i) Oligopeptidgruppen, die aus Sequenzen von 1 bis 50, vorzugsweise 1 bis 10, Aminosäuren bestehen; und
wobei die 4H-Einheit über R¹, R² und/oder R³ an eine Polymerhauptkette gebunden ist (so dass R¹, R² oder R³ eine direkte Bindung darstellen), wobei die anderen R Gruppen unabhängig eine Seitenkette gemäß (a) - (i) darstellen.

7. Das fluorierte supramolekulare Material nach Anspruch 6, wobei das fluorierte supramolekulare Polymer durch die allgemeinen Formeln (8) und (9) dargestellt wird: 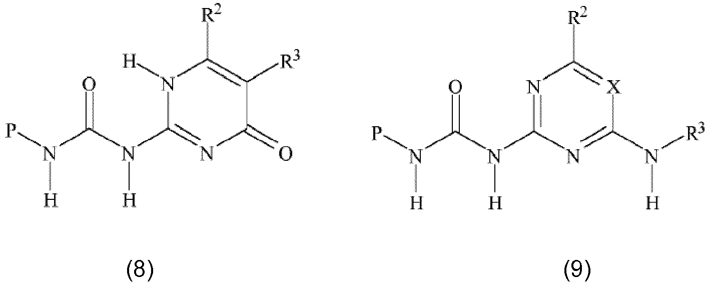 wobei R² und R³ wie in Anspruch 7 definiert sind und P die fluorierte Polymerkette darstellt.

8. Das fluorierte supramolekulare Material nach Anspruch 6, wobei das fluorierte supramolekulare Polymer durch die allgemeinen Formeln (10) und (11) dargestellt wird: 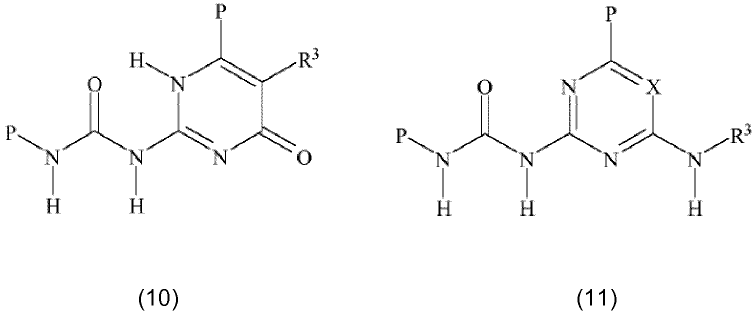 wobei R³ wie in Anspruch 7 definiert ist und P die fluorierte Polymerkette darstellt.

9. Das fluorierte supramolekulare Material nach Anspruch 6, wobei das fluorierte supramolekulare Polymer durch die allgemeinen Formeln (12) und (13) dargestellt wird: 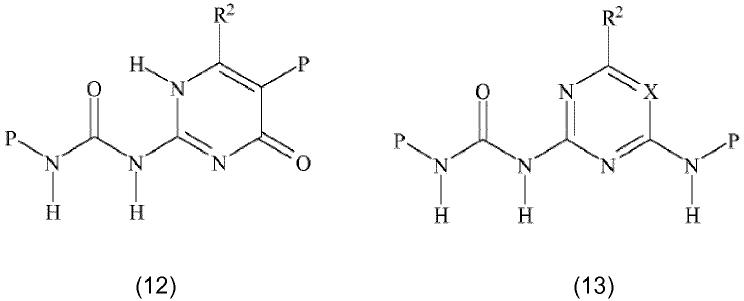 wobei R² wie in Anspruch 7 definiert ist und P die fluorierte Polymerkette darstellt.

10. Das fluorierte supramolekulare Material nach einem der Ansprüche 1 - 9, wobei das relative Gewicht der fluorierten Polymerkette in dem fluorierten supramolekularen Polymer mindestens 70 Gew.-%, bezogen auf das Gesamtgewicht des fluorierten supramolekularen Polymers, beträgt.

11. Das fluorierte supramolekulare Material nach einem der Ansprüche 1 - 10, wobei das nicht-fluorierte Polymer mindestens eine Bindungseinheit umfasst.

12. Ein Verfahren zur Herstellung eines fluorierten supramolekularen Materials nach einem der Ansprüche 1 - 11, wobei ein fluoriertes supramolekulares Polymer hergestellt wird nach dem allgemeinen Schema:
BU-(Fᵢ)ᵣ + P-(F_{i'})ₛ → P-LG-BU
wobei BU eine Bindungseinheit darstellt, Fᵢ eine reaktive Gruppe darstellt, r 1 bis 4 ist, P die fluorierte Polymerkette darstellt, F_{i'} eine komplementäre reaktive Gruppe darstellt, s 1 bis 6 ist, und LG eine Verknüpfungsgruppe darstellt,
wobei die Bindungseinheit ausgewählt ist aus der Gruppe bestehend aus 4H-Einheiten, Aminoethylimidazolinderivaten ausgewählt aus der Gruppe bestehend aus 2-Aminoethylimidazolidon, 1-(2-[(2-Aminoethyl)amino]ethyl)-imidazolidon und 1-(2-(2-[(2-Aminoethylamino]ethyl]amino)ethyl]imidazolidon, und C₁ - C₂₀ Bis(ureido)alkylenen, -arylenen oder -alkarylenen,
wobei die fluorierte Polymerkette mindestens 5 Gew.-% kovalent gebundener Fluoratome enthält, bezogen auf das Gesamtgewicht der fluorierten Polymerkette, und wobei
i) 1 - 50 Gew.-% des fluorierten supramolekularen Polymers gemischt werden mit
ii) 50 - 99 Gew.-%
eines nicht-fluorierten Polymers; oder
einer fluorierten Verbindung; oder
einer Kombination eines nicht-fluorierten Polymers und einer fluorierten Verbindung, bezogen auf dem Gesamtgewicht des fluorierten supramolekularen Materials,
wobei das nicht-fluorierte Polymer weniger als 5 Gew.-% kovalent gebundene Fluoratome enthält, bezogen auf das Gesamtgewicht des nicht-fluorierten Polymers,
wobei die fluorierte Verbindung ein Fluorpolymer ist, das mindestens 5 Gew.-% kovalent gebundene Fluoratome enthält, bezogen auf das Gesamtgewicht des Fluorpolymers, und das ein Molekulargewicht von 600 bis 5000 aufweist, und wobei dann das Fluorpolymer ein Perfluorpolyether ist.

13. Das Verfahren nach Anspruch 12, wobei das fluorierte supramolekulare Polymer in einem Verfahren zur Massenfertigung oder in einem Lösungsverfahren, in dem der Feststoffgehalt zwischen etwa 30 und etwa 100 Gew.-% beträgt, bezogen auf das Gesamtgewicht der Lösung, erhältlich ist.

14. Ein fluoriertes supramolekulares Material, erhältlich nach dem Verfahren nach Anspruch 12 oder Anspruch 13.

15. Eine Beschichtungszusammensetzung, umfassend das fluorierte supramolekulare Material nach einem der Ansprüche 1 - 11 oder 14.

## Revendications

1. Matériau supramoléculaire fluoré comprenant, sur la base du poids total du matériau supramoléculaire fluoré :
i) 1 à 50 % en poids d'un polymère supramoléculaire fluoré, et
ii) 50 à 99 % en poids de
un polymère non fluoré ; ou
un composé fluoré ; ou
une combinaison d'un polymère non fluoré et d'un composé fluoré,
dans lequel le polymère supramoléculaire fluoré contient au moins 5 % en poids d'atomes de fluor liés par covalence, sur la base du poids total du polymère supramoléculaire fluoré, ledit polymère supramoléculaire fluoré comprenant une chaîne polymère fluorée et une unité (auto-)complémentaire capable de se former au niveau d'au moins trois liaisons hydrogène [Unité de Liaison], ladite unité (auto-)complémentaire étant liée de manière covalente à ladite chaîne polymère fluorée, ladite unité (auto-)complémentaire étant choisie parmi le groupe constitué d'unités 4H, de dérivés amino-éthyl-imidazoline sélectionnés parmi le groupe constitué de 2-amino-éthylimidazolidone, 1-(2-[(2-aminoéthyl)amino]-éthyl)-imidazolidone et 1-(2-(2-[(2-aminoéthylarnino]léthyl]amino)-éthyl]-imidazolidone, et de bis(uréido)-alkylènes, -arylènes ou -alkarylènes en C₁-C₂₀,
dans lequel le polymère non fluoré contient moins de 5 % en poids d'atomes de fluor liés par covalence, sur la base du poids total du polymère non fluoré, et
dans lequel le composé fluoré est un fluoropolymère contenant au moins 5 % en poids d'atomes de fluor liés par covalence, sur la base du poids total du fluoropolymère, et ayant un poids moléculaire de 600 à 5 000, et dans lequel le fluoropolymère est un perfluoropolyéther.

2. Matériau supramoléculaire fluoré selon la revendication 1, dans lequel le polymère supramoléculaire fluoré comprend 2 à 50 Unités de Liaison.

3. Matériau supramoléculaire fluoré selon la revendication 1 ou la revendication 2, dans lequel le poids moléculaire moyen en nombre Mₙ du polymère supramoléculaire fluoré est compris entre 300 et 100 000.

4. Matériau supramoléculaire fluoré selon l'une quelconque des revendications 1 à 3, dans lequel le polymère supramoléculaire fluoré a une température de transition vitreuse unique T_{g}, T_{g} étant dans la plage de -150 °C à 200 °C.

5. Matériau supramoléculaire fluoré selon la revendication 1, dans lequel l'unité de Liaison est une unité 4H, dans laquelle l'unité 4H est représentée par les formules générales (1) ou (2) : 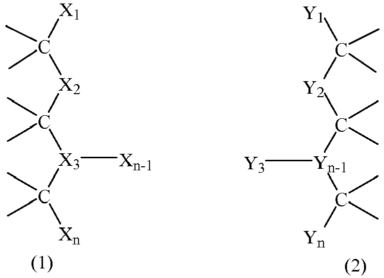 où les liaisons C-Xᵢ et C-Yᵢ représentent chacune une liaison simple ou double, n est égal à 4 ou plus, et Xᵢ représente des donneurs ou des accepteurs qui forment des ponts hydrogène avec l'unité monomère de formation de pont H contenant une forme générale correspondante (2) liée à eux, Xᵢ représentant un donneur et Yᵢ un accepteur et vice versa.

6. Matériau supramoléculaire fluoré selon la revendication 5, dans lequel l'unité 4H à la formule générale (3) ou la formule (4), et des tautomères de celles-ci : 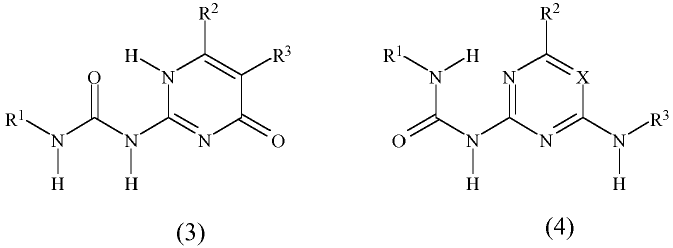 où X est un atome d'azote ou un atome de carbone portant un substituant R⁸, de préférence un atome d'azote, et où R¹, R², R³ et R⁸ sont indépendamment choisis parmi le groupe constitué de :
(a) hydrogène ;
(b) alkyle en C₁-C₂₀ ;
(c) aryle en C₆-C₁₂ ;
(d) alkaryle en C₇-C₁₂ ;
(e) alkylaryle en C₇-C₁₂ ;
(f) des groupes polyester ayant la formule (5) 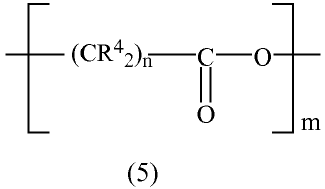 où R⁴ est indépendamment choisi parmi le groupe constitué d'hydrogène et d'un alkyle linéaire ou ramifié en C₁-C₆, n est compris entre 1 et 6 et m est compris entre 10 à 100 ;
(g) des groupes alkyle en C₁-C₁₀ substitués par 1 à 4 groupes uréido selon la formule (6)
R⁵-NH-C(O)-NH- (6)
où R⁵ est choisi parmi le groupe constitué d'hydrogène et d'un alkyle linéaire ou ramifié en C₁-C₆ ;
(h) des groupes polyéther ayant la formule (7) 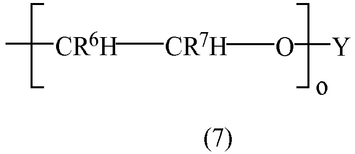 où R⁶ et R⁷ sont indépendamment choisis parmi le groupe constitué d'hydrogène et d'un alkyle linéaire ou ramifié en C₁-C₆ et o est compris entre 10 et 100 ; et
(i) des groupes oligopeptidiques constitués de séquences de 1 à 50, de préférence de 1 à 10, acides aminés ; et
dans lequel l'unité 4H est liée à un squelette de polymère via R¹, R² et/ou R³ (de sorte que R¹, R² ou R³ représente une liaison directe), les autres groupes R représentant indépendamment une chaîne latérale selon (a) - (i).

7. Matériau supramoléculaire fluoré selon la revendication 6, dans lequel le polymère supramoléculaire fluoré est représenté par les formules générales (8) et (9) : 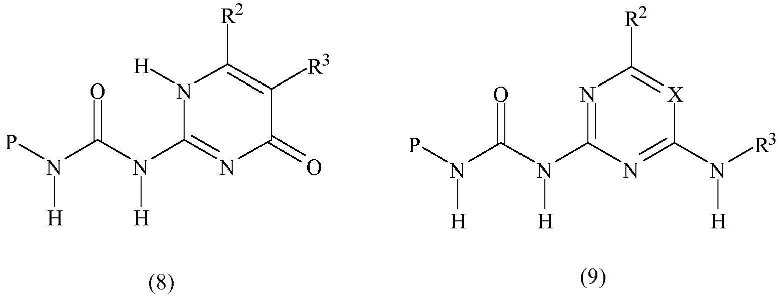 où R² et R³ sont tels que définis dans la revendication 7 et P représente la chaîne polymère fluoré.

8. Matériau supramoléculaire fluoré selon la revendication 6, dans lequel le polymère supramoléculaire fluoré est représenté par les formules générales (10) et (11) : 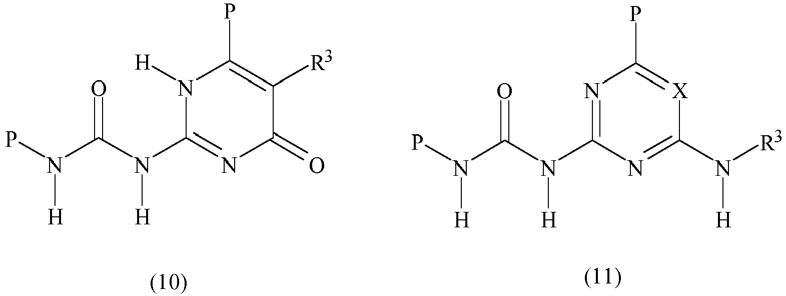 où R³ est tel que défini dans la revendication 7 et P représente la chaîne polymère fluoré.

9. Matériau supramoléculaire fluoré selon la revendication 6, dans lequel le polymère supramoléculaire fluoré est représenté par les formules générales (12) et (13) : 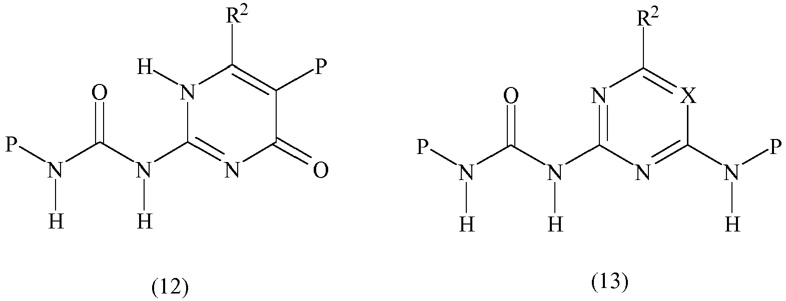 où R² est tel que défini dans la revendication 7 et P représente la chaîne polymère fluoré.

10. Matériau supramoléculaire fluoré selon l'une quelconque des revendications 1 à 9, dans lequel le poids relatif de la chaîne polymère fluoré dans le polymère supramoléculaire fluoré est d'au moins 70 % en poids, sur la base du poids total du polymère supramoléculaire fluoré.

11. Matériau supramoléculaire fluoré selon l'une quelconque des revendications 1 à 10, dans lequel le polymère non fluoré comprend au moins une Unité de Liaison.

12. Procédé de préparation d'un matériau supramoléculaire fluoré selon l'une quelconque des revendications 1 à 11, dans lequel un polymère supramoléculaire fluoré est préparé conformément au schéma général :
BU-(Fᵢ)ᵣ + P-(F_{i'})ₛ → P-LG-BU
où BU représente une Unité de Liaison, Fᵢ représente un groupe réactif, r est compris entre 1 et 4, P représente la chaîne polymère fluoré, F_{i'} représente un groupe réactif complémentaire, s est compris entre 1 et 6, et LG représente un groupe de liaison,
ladite Unité de Liaison étant choisie parmi le groupe constitué d'unités 4H, de dérivés amino-éthyl-imidazoline sélectionnés parmi le groupe constitué de 2-amino-éthylimidazolidone, 1-(2-[(2-aminoéthyl)amino]-éthyl)-imidazolidone et 1-(2-(2-[(2-aminoéthylamino]léthyl]amino)-éthyl]-imidazolidone, et de bis(uréido)-alkylènes, -arylènes ou -alkarylènes en C₁-C₂₀,
dans lequel la chaîne polymère fluoré contient au moins 5 % en poids d'atomes de fluor liés par covalence, sur la base du poids total de la chaîne de polymère fluoré, et dans lequel
i) 1 à 50 % en poids du polymère supramoléculaire fluoré est mélangé avec
ii) 50 à 99 % en poids de
un polymère non fluoré ; ou
un composé fluoré ; ou
une combinaison d'un polymère non fluoré et d'un composé fluoré, sur la base du poids total du matériau supramoléculaire fluoré,
dans lequel le polymère non fluoré contient moins de 5 % en poids d'atomes de fluor liés par covalence, sur la base du poids total du polymère non fluoré, dans lequel le composé fluoré est un fluoropolymère contenant au moins 5 % en poids d'atomes de fluor liés par covalence, sur la base du poids total du fluoropolymère, et ayant un poids moléculaire de 600 à 5 000, et dans lequel alors le fluoropolymère est un perfluoropolyéther.

13. Procédé selon la revendication 12, dans lequel le polymère supramoléculaire fluoré peut être obtenu dans un procédé en masse ou dans un procédé en solution dans lequel la teneur en matières solides est comprise entre environ 30 et environ 100 % en poids, sur la base du poids total de la solution.

14. Matériau supramoléculaire fluoré pouvant être obtenu par le procédé selon la revendication 12 ou la revendication 13.

15. Composition de revêtement comprenant le matériau supramoléculaire fluoré selon l'une quelconque des revendications 1 à 11 ou 14.
